# EUROPEAN PATENT SPECIFICATION

(11) **EP 0 637 576 B1**
(45) Date of publication and mention of the grant of the patent: **08.11.2000**
(21) Application number: 94305240.7
(22) Date of filing: 18.07.1994
(51) Int. Cl.: C04B 35/48, C04B 35/486

(54) **Water-resistant ceramics articles**
Wasserbeständige Keramikformkörper
Produits céramiques résistant à l'eau

(30) Priority: 06.08.1993 GB 9316325
(43) Date of publication of application: 08.02.1995
(73) Proprietor: TIOXIDE SPECIALTIES LIMITED, London W14 0QL (GB)
(72) Inventor: Dransfield, Graham Paul, Stockton on Tees, Cleveland (GB); Jones, Anthony Gould, Sedgefield, County Durham (GB); Lawson, Simon, Barmston, Washington, Tyne & Wear (GB)
(74) Representative: Winkler, Andreas, Dr.

(56) References cited:
- EP-A- 0 209 081
- WO-A-92/12105
- WO-A-94/01762
- GB-A- 2 204 030
- GB-A- 2 234 500
- NAKAJIMA ET AL: ADVANCES IN CERAMICS, vol. 12, 1984, AMERICAN CERAMIC SOCIETY, COLUMBUS, US, pages 399-407, XP002049039

## Description

This invention relates to water-resistant ceramic articles prepared from stabilised zirconia and in particular to the use of such ceramic articles in applications involving contact with hot water.

Ceramics formed from a composition containing zirconia and an agent such as yttria which has the effect of stabilising the zirconia in the cubic and/or tetragonal phase at room temperature are well known. Such ceramics have desirable properties and, in particular, are tough.

However, generally, ceramics which have been prepared by stabilisation of zirconia with yttria are not considered to be useful in situations involving prolonged contact with hot water since contact with the water causes degradation. Degradation is rapid at a temperature of about 200°C but is also of significance at temperatures above about 60°C.

UK Patent Application GB 2 234 500 discloses one method of preparing yttria-stabilised zirconia ceramic articles which are resistant to attack by water by utilising a particulate zirconia, the particles of which are coated with a hydrous oxide or oxide of yttrium.

It is an object of this invention to provide an alternative means of preparing ceramic articles which are resistant to attack by hot water.

According to the invention use of a ceramic article comprises exposing said article to water at a temperature of at least 60°C wherein at least the surface of said ceramic article which is exposed to the water is prepared by forming a mixture of a first particulate zirconia composite and a second particulate zirconia composite in which the first particulate zirconia composite contains from 1 to 4 molar per cent yttria calculated as Y₂O₃ with respect to zirconia, the second particulate zirconia composite contains from 4 to 20 molar per cent yttria calculated as Y₂O₃ with respect to zirconia and the second particulate zirconia composite contains at least 2 molar per cent more yttria calculated as Y₂O₃ with respect to zirconia than the first particulate zirconia composite, shaping said mixture to produce a ceramic green body and sintering said ceramic green body at a temperature of at least 1200°C but not greater than 1350°C.

This invention utilises two different particulate zirconia composites each of which contains yttria. These composites can be prepared by any technique which produces a composite in which the yttria is well distributed. The composite can, for example, be produced by intimately mixing particulate zirconia and particulate yttria. An intimate mixture can be produced by, for example, subjecting a mixture of the powders to a milling process such as ball-milling in the presence of a liquid or attritor-milling in the presence of water. Alternatively, the yttria can be formed as a coating on the surface of the zirconia particles as is described in UK Patent Application 2 234 500.

One form of composite which is suitable for use in this invention is a particulate form of modified zirconia known as co-precipitated yttria-stabilised zirconia. This is prepared by precipitating a mixture of zirconium and yttrium hydroxides or hydrous oxides from a solution containing a hydrolysable zirconium salt and a hydrolysable yttrium salt. The co-precipitated product is normally crushed, dried and calcined to produce a particulate oxide containing a mixture of zirconia and yttria within the particles thereof in which the zirconia is stabilised in the cubic or tetragonal crystalline form. Co-precipitated yttria-stabilised zirconia is produced with varying proportions of yttria by varying the relative amounts of yttrium salt and zirconium salt used to precipitate the mixed oxide or hydroxide.

The first particulate zirconia composite contains from 1 to 4 molar per cent yttria calculated as Y₂O₃ with respect to zirconia. Preferably, the amount of yttria present is from 2 to 3 molar per cent calculated as Y₂O₃.

The second particulate zirconia composite contains 4 to 20 molar per cent yttria calculated as Y₂O₃ with respect to zirconia. Preferably the amount of yttria present is from 4 to 12 molar per cent calculated as Y₂O₃ and most preferably the amount is from 4 to 10 molar per cent calculated as Y₂O₃ based on zirconia.

The first and second particulate zirconia composites contain different amounts of yttria and it is essential that the concentrations of yttria in the two composites differ by at least 2 molar per cent calculated as Y₂O₃ with respect to zirconia. Preferably the concentrations of yttria differ by at least 3 molar per cent.

The proportion of first and second particulate zirconia composites used to form a mixture depends upon the concentration of yttria in each composite and the desired concentration of yttria in the final ceramics article. Mixtures containing from about 2 to about 5 molar per cent yttria calculated as Y₂O₃ based on zirconia have been shown to produce ceramic articles having useful strength and toughness. Preferably the amount of yttria present in the mixture is from 2.5 to 5 molar per cent calculated as Y₂O₃.

Generally, the mixture will contain the first and second particulate zirconia composites in a ratio of between 20 parts by weight first composite to 1 part by weight second composite and 2 parts by weight first composite to 1 part by weight second composite. Mixtures containing between 10 and 2 parts by weight first composite to 1 part by weight second composite have been found to have particular utility. A useful resistance to hot water has been demonstrated by a mixture containing from 2 to 20 parts of a co-precipitated yttria-stabilised zirconia powder containing from 2 to 3 molar per cent yttria calculated as Y₂O₃ based on zirconia and 1 part of a co-precipitated yttria-stabilised zirconia powder containing from 7 to 8 molar per cent yttria calculated as Y₂O₃ based on zirconia.

The first and second zirconia composites are used in the form of powders and it is preferred that the particles of these powders have an average particle size of less than 0.5 micrometres. More preferably the average particle size is less than 0.2 micrometres.

In the method of preparing the ceramic articles used in the invention the first and second zirconia composites are mixed together. Any form of mixing which results in a uniform mixture of the two composites is suitable. Typically, the two composites are mixed by milling a mixture of the two powders in an attritor mill in the presence of water.

The method employed to shape the mixture into a ceramic green body depends on the shape of the article but generally the mixture will be shaped by die pressing or moulding. Suitable die pressing techniques include uniaxial pressing and isostatic pressing. If desired the mixture can be mixed with a binding agent prior to shaping.

After shaping the green body is fired at a temperature of at least 1200°C but not greater than 1350° to form a sintered article.

The resistance to attack by hot water of the articles produced for use in this invention can be assessed by immersion of the sintered articles in distilled water in an autoclave under pressure, if necessary, following the method of Nakajima et al., Advances in Ceramics, Volume 12, pages 399-403 (1984). Yttria-stabilised zirconia ceramic articles prepared by conventional methods have been shown to degrade on exposure to water at about 60°C and are very rapidly destroyed by water at a temperature of 180°C to 200°C.

Ceramic material which has been formed from a mixture of two composites as hereinbefore described has been shown to be extremely resistant to degradation by water. Consequently, the use of such material to form at least the surface of a ceramic article enables the article to be used in applications where exposure to water above 60°C occurs. The ceramic articles are particularly useful in situations where exposure to water above 100°C occurs and exposure of the surface to water at a temperature of 180°C for several hundred hours has been shown to result in little or no loss in strength using the aforementioned test.

According to the invention ceramic articles are employed where a surface is contactable in use with hot water. The water may be present as a liquid or vapour or may be gaseous. Typical articles include various components for internal combustion engines such as valves, valve guides, valve seats, cylinder linings, exhaust parts and piston crowns, components for mills such as impact surfaces in high pressure jet mills, rotors, impellers, shafts, casings and bearing surfaces for pumps.

The invention is illustrated by Example 3. Examples 1 and 2 are comparative.

### EXAMPLE 1

90 parts by weight of a co-precipitated yttria/zirconia mixture containing 2.5 molar per cent yttria and sold under the Trade Name Tosoh TZ 2.5Y were mixed with 10 parts by weight of co-precipitated yttria/zirconia containing 8 molar per cent yttria (Tosoh TZ 8Y) by attritor milling with zirconia balls of 1 mm diameter at a concentration of 40 per cent by weight in water for 15 minutes. The milled mixture was separated from the zirconia balls flocculated by adjusting the pH to 9 and filtered. The zirconia was then repulped with propan-2-ol and subjected to ball-milling overnight at a concentration of 300 grams per litre in propan-2-ol using 10 mm zirconia balls to break up any agglomerates. After separating the zirconia balls the powder was filtered and dried in an oven overnight at 110°C. Samples of the dry powder were formed into discs approximately 30 mm in diameter by isostatic pressing at 30 MPa and the discs were sintered by heating at 1400°C in air for 2 hours.

The density of the sintered discs was determined by a water immersion method to be 6.1 grams/cm³. The discs were immersed in distilled water in an autoclave at 180°C and a pressure of 1 MPa, following the method of Nakajima et al, Advances in Ceramics, Vol. 12, pages 399-403 (1984) and examined at intervals. For comparison similar discs prepared from a co-precipitated yttria/zirconia containing 3.0 molar per cent yttria (Tosoh TZ 3Y) were also tested in the autoclave.

After 4 hours exposure the control samples prepared from Tosoh TZ 3Y had been degraded by the exposure and had been reduced to a powder.

After 50 hours exposure the samples prepared according to Example 1 had retained their shape and original density of 6.1 grams/cm³. After 136 hours exposure these samples had degraded.

### Example 2

Example 1 was repeated except that 80 parts of Tosoh TZ 2.5Y yttria/zirconia were mixed with 20 parts Tosoh TZ 8Y yttria/zirconia.

The initial density of the sintered discs was found to be 6.09 grams/cm³ and this density was retained after 136 hours exposure to water at 180°C. A further indication that these samples were not being degraded by the immersion test was obtained by measuring the concentration of monoclinic zirconia at the surface of the samples by X-ray diffraction. The monoclinic content at the surface of the samples prepared according to Example 2 was 0.1% after 136 hours exposure and 0.5% after 950 hours exposure.

### EXAMPLE 3

3.6 parts by weight yttria and 76.4 parts by weight zirconia were mixed by rapid stirring with water to form a slurry having a concentration of 35 wt % solids (2.5 mole % yttria). This slurry was mixed with 20 parts by weight of a co-milled yttria-zirconia composite, made by passing an aqueous slurry (40% by weight solids) of zirconia and yttria through a bead mill (Netzch LME4) operating at 2400 rpm and containing 1 mm zirconia beads with a residence time of 8 minutes followed by spray drying and containing 8 mole % yttria. This mixture was attritor milled with zirconia beads of 1 mm diameter at a concentration of 40 per cent by weight for 30 minutes. The resultant slurry was flocculated by adjusting the pH with 20% ammonium hydroxide solution to 11.2. The mixture was then filtered, oven dried and sieved. The final mixture contained 3.5 mole per cent yttria. 10 gm discs were die pressed to 25 MPa and then isostatically pressed to 100 MPa and sintered at 1350°C, 1400°C and 1450°C with a time at maximum temperature of 2 hours. Each disc was then aged in an autoclave according to the method of Example 1. Sample failure was determined by a disc cracking or by more extensive degradation.

The survival time for the disc sintered at 1450°C was between 24 and 48 hours.

The survival time for the disc sintered at 1400°C was 235 hours.

The survival time for the disc sintered at 1350°C was 910 hours.

By comparison, a powder which had been prepared according to this method from an yttria-zirconia slurry containing 3.5 mole per cent yttria and which was pressed, sintered and aged in the same manner gave the following results.

The survival time for the 1450°C sintered disc was 24 hours.

The survival time for the 1400°C sintered disc was 115 hours.

The survival time for the 1350°C sintered disc was 350 hours.

## Claims

1. Use of use of a ceramic article comprising exposing said article to water at a temperature of at least 60°C characterised in that at least the surface of said ceramic article which is exposed to the water is prepared by forming a mixture of a first particulate zirconia composite and a second particulate zirconia composite in which the first particulate zirconia composite contains from 1 to 4 molar per cent yttria calculated as Y₂O₃ with respect to zirconia, the second particulate zirconia composite contains from 4 to 20 molar per cent yttria calculated as Y₂O₃ with respect to zirconia and the second particulate zirconia composite contains at least 2 molar per cent more yttria calculated as Y₂O₃ with respect to zirconia than the first particulate zirconia composite, shaping said mixture to produce a ceramic green body and sintering said ceramic green body at a temperature of at least 1200°C but not greater than 1350°C.

2. according to claim 1 characterised in that at least one of said first particulate zirconia composite and said second particulate zirconia composite is produced by milling together particulate zirconia and particulate yttria.

3. Use according to claim 1 characterised in that at least one of said first particulate zirconia composite and said second particulate zirconia composite comprises zirconia particles having a surface coating of yttria.

4. Use according to claim 1 characterised in that at least one of said first particulate zirconia composite and said second particulate zirconia composite comprises co-precipitated yttria-stabilised zirconia.

5. according to any one of the preceding claims characterised in that the first particulate zirconia composite contains from 2 to 3 molar per cent yttria calculated as Y₂O₃ with respect to zirconia.

6. Use according to any one of the preceding claims characterised in that the second particulate zirconia composite contains from 4 to 12 molar per cent yttria calculated as Y₂O₃ with respect to zirconia.

7. Use according to any one of the preceding claims characterised in that the mixture of said first particulate zirconia composite and said second particulate zirconia composite contains from 2 to 5 molar per cent yttria calculated as Y₂O₃ with respect to zirconia.

8. Use according to any one of the preceding claims characterised in that the mixture contains said first particulate zirconia composite and said second particulate zirconia composite in a weight ratio between 20 parts first composite to 1 part second composite and 2 parts first composite to 1 part second composite.

9. Use according to claim 8 in which the first particulate zirconia composite contains from 2 to 3 molar per cent yttria calculated as Y₂O₃ with respect to zirconia and the second particulate zirconia composite contains from 7 to 8 molar per cent yttria calculated as Y₂O₃ with respect to zirconia.

10. Use according to any one of the preceding claims characterised in that the first particulate zirconia composite and the second particulate zirconia composite have an average particle size less than 0.5 micrometres.

11. Use according to any one of the preceding claims characterised in that the first particulate zirconia composite and second particulate zirconia composite are mixed by milling a mixture of the two composites in an attritor mill in the presence of water.

## Patentansprüche

1. Verwendung eines Keramikgegenstands, die Wasseraussetzen des Gegenstands bei einer Temperatur von mindestens 60 °C umfaßt, **dadurch gekennzeichnet**, daß mindestens die Oberfläche des Keramikgegenstands, die dem Wasser ausgesetzt wird, hergestellt ist durch Bilden eines Gemisches eines ersten teilchenförmigen Zirconiumdioxidkomposits und eines zweiten teilchenförmigen Zirconiumdioxidkomposits, worin der erste teilchenförmige Zirconiumdioxidkomposit von 1 bis 4 Mol-% Yttriumoxid, berechnet als Y₂O₃ in bezug auf Zirconiumdioxid, enthält, der zweite teilchenförmige Zirconiumdioxidkomposit von 4 bis 20 Mol-% Yttriumoxid, berechnet als Y₂O₃ in bezug auf Zirconiumdioxid, enthält, und der zweite teilchenförmige Zirconiumdioxidkomposit mindestens 2 Mol-% mehr Yttriumoxid, berechnet als Y₂O₃ in bezug auf Zirconiumdioxid, als der erste teilchenförmige Zirconiumdioxidkomposit enthält, Formen des Gemisches, um einen keramischen Grünkörper herzustellen, und Sintern des keramischen Grünkörpers bei einer Temperatur von mindestens 1200 °C, aber nicht mehr als 1350 °C.

2. Verwendung nach Anspruch 1, **dadurch gekennzeichnet**, daß mindestens einer des ersten teilchenförmigen Zirconiumdioxidkomposits und des zweiten teilchenförmigen Zirconiumdioxidkomposits durch Vermahlen von teilchenförmigem Zirconiumdioxid und teilchenförmigem Yttriumoxid hergestellt worden ist.

3. Verwendung nach Anspruch 1, **dadurch gekennzeichnet**, daß mindestens einer des ersten teilchenförmigen Zirconiumdioxidkomposits und des zweiten teilchenförmigen Zirconiumdioxidkomposits Zirconiumdioxidpartikel umfaßt, die eine Oberflächenbeschichtung aus Yttriumoxid aufweisen.

4. Verwendung nach Anspruch 1, **dadurch gekennzeichnet**, daß mindestens einer des ersten teilchenförmigen Zirconiumdioxidkomposits und des zweiten teilchenförmigen Zirconiumdioxidkomposits kopräzipitiertes Yttriumoxid-stabilisiertes Zirconiumdioxid umfaßt.

5. Verwendung nach einem der vorhergehenden Ansprüche, **dadurch gekennzeichnet**, daß der erste teilchenförmige Zirconiumdioxidkomposit von 2 bis 3 Mol-% Yttriumoxid, berechnet als Y₂O₃ in bezug auf Zirconiumdioxid, enthält.

6. Verwendung nach einem der vorhergehenden Ansprüche, **dadurch gekennzeichnet**, daß der zweite teilchenförmige Zirconiumdioxidkomposit von 4 bis 12 Mol-% Yttriumoxid, berechnet als Y₂O₃ in bezug auf Zirconiumdioxid, enthält.

7. Verwendung nach einem der vorhergehenden Ansprüche, **dadurch gekennzeichnet**, daß das Gemisch des ersten teilchenförmigen Zirconiumdioxidkomposits und des zweiten teilchenförmigen Zirconiumdioxidkomposits von 2 bis 5 Mol-% Yttriumoxid, berechnet als Y₂O₃ in bezug auf Zirconiumdioxid, enthält.

8. Verwendung nach einem der vorhergehenden Ansprüche, **dadurch gekennzeichnet**, daß das Gemisch den ersten teilchenförmigen Zirconiumdioxidkomposit und den zweiten teilchenförmigen Zirconiumdioxidkomposit in einem Gewichtsverhältnis zwischen 20 Teile erster Komposit zu 1 Teil zweiter Komposit und 2 Teile erster Komposit zu 1 Teil zweiter Komposit enthält.

9. Verwendung nach Anspruch 8, wobei der erste teilchenförmige Zirconiumdioxidkomposit von 2 bis 3 Mol-% Yttriumoxid, berechnet als Y₂O₃ in bezug auf Zirconiumdioxid, und der zweite teilchenförmige Zirconiumdioxidkomposit von 7 bis 8 Mol-% Yttriumoxid, berechnet als Y₂O₃ in bezug auf Zirconiumdioxid, enthält.

10. Verwendung nach einem der vorhergehenden Ansprüche, **dadurch gekennzeichnet**, daß der erste teilchenförmige Zirconiumdioxidkomposit und der zweite teilchenförmige Zirconiumdioxidkomposit eine durchschnittliche Teilchengröße von weniger als 0,5 µm aufweisen.

11. Verwendung nach einem der vorhergehenden Ansprüche, **dadurch gekennzeichnet**, daß der erste teilchenförmige Zirconiumdioxidkomposit und der zweite teilchenförmige Zirconiumdioxidkomposit durch Vermahlen eines Gemisches der zwei Komposite in einer Attritormühle in Gegenwart von Wasser vermischt werden.

## Revendications

1. Utilisation d'un produit céramique comprenant l'exposition dudit produit à l'eau à une température d'au moins 60°C caractérisée en ce qu'au moins la surface dudit produit céramique qui est exposée à l'eau est préparée par formation d'un mélange d'un premier composite de zircone particulaire et d'un second composite de zircone particulaire où le premier composite de zircone particulaire confient de 1 à 4 mol% d'yttria calculés en Y₂O₃ par rapport à la zircone, le second composite de zircone particulaire contient de 4 à 20 mol% d'yttria calculés en Y₂O₃ par rapport à la zircone et le second composite de zircone particulaire contient au moins 2 mol% d'yttria calculés en Y₂O₃ par rapport à la zircone de plus que le premier composite de zircone particulaire, mise en forme dudit mélange pour produire un corps cru céramique et frittage dudit corps cru céramique à une température d'au moins 1200°C mais pas supérieure à 1350°C.

2. Utilisation selon la revendication 1 caractérisée en ce qu'au moins un composite parmi ledit premier composite de zircone particulaire et ledit second composite de zircone particulaire est produit par broyage ensemble de zircone particulaire et d'yttria particulaire.

3. Utilisation selon la revendication 1 caractérisée en ce qu'au moins un composite parmi ledit premier composite de zircone particulaire et ledit second composite de zircone particulaire comprend des particules de zircone ayant un revêtement superficiel d'yttria.

4. Utilisation selon la revendication 1 caractérisée en ce qu'au moins un composite parmi ledit premier composite de zircone particulaire et ledit second composite de zircone particulaire comprend de la zircone stabilisée par l'yttria coprécipitée.

5. Utilisation selon l'une quelconque des revendications précédentes caractérisée en ce que le premier composite de zircone particulaire contient de 2 à 3 mol% d'yttria calculés en Y₂O₃ par rapport à la zircone.

6. Utilisation selon l'une quelconque des revendications précédentes caractérisée en ce que le second composite de zircone particulaire contient de 4 à 12 mol% d'yttria calculés en Y₂O₃ par rapport à la zircone.

7. Utilisation selon l'une quelconque des revendications précédentes caractérisée en ce que le mélange dudit premier composite de zircone particulaire et dudit second composite de zircone particulaire contient de 2 à 5 mol% d'yttria calculés en Y₂O₃ par rapport à la zircone.

8. Utilisation selon l'une quelconque des revendications précédentes caractérisée en ce que le mélange confient ledit premier composite de zircone particulaire et ledit second composite de zircone particulaire dans un rapport massique situé entre 20 parties de premier composite à 1 partie de second composite et 2 parties de premier composite à 1 partie de second composite.

9. Utilisation selon la revendication 8 où le premier composite de zircone particulaire contient de 2 à 3 mol% d'yttria calculés en Y₂O₃ par rapport à la zircone et le second composite de zircone particulaire contient de 7 à 8 mol% d'yttria calculés en Y₂O₃ par rapport à la zircone.

10. Utilisation selon l'une quelconque des revendications précédentes caractérisée en ce que le premier composite de zircone particulaire et le second composite de zircone particulaire ont une taille moyenne de particule inférieure à 0,5 micromètre.

11. Utilisation selon l'une quelconque des revendications précédentes caractérisée en ce que le premier composite de zircone particulaire et le second composite de zircone particulaire sont mélangés par broyage d'un mélange des deux composites dans un broyeur par frottement en présence d'eau.
